# EUROPEAN PATENT SPECIFICATION

(11) **EP 4 020 199 B1**
(45) Date of publication and mention of the grant of the patent: **14.10.2026**
(21) Application number: 21176773.6
(22) Date of filing: 31.05.2021
(51) Int. Cl.: G06F 9/46, G06F 9/54

(54) **METHOD AND APPARATUS FOR READING AND WRITING CLIPBOARD INFORMATION AND STORAGE MEDIUM**
VERFAHREN UND VORRICHTUNG ZUM LESEN UND SCHREIBEN VON ZWISCHENABLAGEINFORMATIONEN UND SPEICHERMEDIUM
PROCÉDÉ ET APPAREIL DE LECTURE ET D'ÉCRITURE D'INFORMATIONS DE TABLETTE ET SUPPORT DE STOCKAGE

(30) Priority: 25.12.2020 CN 202011563297
(43) Date of publication of application: 29.06.2022
(73) Proprietor: Beijing Xiaomi Mobile Software Co., Ltd., Beijing 100085 (CN)
(72) Inventor: LI, Dong, Beijing, 100085 (CN); FAN, Lin, Beijing, 100085 (CN); ZHANG, Weidong, Beijing, 100085 (CN)
(74) Representative: dompatent

(56) References cited:
- WO-A1-2016/009085
- US-A1- 2008 282 180
- US-A1- 2014 280 132
- US-A1- 2019 303 596
- ONARLIOGLU KAAN ET AL: "Overhaul: Input-Driven Access Control for Better Privacy on Traditional Operating Systems", 2016 46TH ANNUAL IEEE/IFIP INTERNATIONAL CONFERENCE ON DEPENDABLE SYSTEMS AND NETWORKS (DSN), IEEE, 28 June 2016 (2016-06-28), pages 443 - 454, XP032973581, DOI: 10.1109/DSN.2016.47
- FRANZISKA ROESNER ET AL: "User-Driven Access Control: Rethinking Permission Granting in Modern Operating Systems", SECURITY AND PRIVACY (SP), 2012 IEEE SYMPOSIUM ON, IEEE, 20 May 2012 (2012-05-20), pages 224 - 238, XP032456289, ISBN: 978-1-4673-1244-8, DOI: 10.1109/SP.2012.24

## Description

### BACKGROUND

The clipboard is a storage area provided by the terminal operating system that can temporarily store information and share the information stored temporarily, which is convenient for the user to edit or use based on the clipboard information stored in the clipboard. In related technologies, only one clipboard is arranged usually in the terminal operating system, and any application in the terminal can read the clipboard information in the clipboard and write the clipboard information into the behavior record of the application. ONARLIOGLU KAAN ET AL: "Overhaul: Input-Driven Access Control for Better Privacy on Traditional Operating Systems", 2016 46TH ANNUAL IEEE/IFIP INTERNATIONAL CONFERENCE ON OEPENOABLE SYSTEMS ANO NETWORKS (OSN), IEEE, 28 June 2016 (2016-06-28) , pages 443-454, XP032973581 discloses input-driven access control for better privacy on traditional operating systems. FRANZISKA ROESNER ET AL: "User-Driven Access Control: Rethinking Permission Granting in Modern Operating Systems", SECURITY ANO PRIVACY (SP), 2012 IEEE SYMPOSIUM ON, IEEE, 20 May 2012 (2012-05-20), pages 224-238, XP032456289 discloses user-driven access control: rethinking permission granting in modern operating systems. WO 2016/009085 A1 discloses cross-domain data sharing with permission control. US 2019/303596 A1 discloses a policy-based clipboard access control system in which per-application read and write permissions are enforced upfront and reflected in the user interface by enabling or disabling clipboard actions so that unauthorised clipboard access attempts are prevented at the UI level.

### SUMMARY

The present disclosure relates to the field of terminal technologies, and more specifically, to a method for reading and writing clipboard information, an apparatus for reading and writing clipboard information and a storage medium.

The invention is set out in the appended set of claims.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this description, illustrate embodiments consistent with the present disclosure and, together with the description, serve to explain the principles of the present disclosure.
FIG. 1 is a flowchart showing a method for reading and writing clipboard information according to some embodiments.
FIG. 2 is a flowchart showing another method for reading and writing clipboard information according to some embodiments.
FIG. 3 is a schematic diagram showing display information according to some embodiments.
FIG. 4 is a schematic diagram showing another display information according to some embodiments.
FIG. 5 is a schematic diagram showing yet another display information according to some embodiments.
FIG. 6 is a flowchart showing yet another method for reading and writing clipboard information according to some embodiments.
FIG. 7 is a flowchart showing yet another method for reading and writing clipboard information according to some embodiments.
FIG. 8 is a schematic diagram showing yet another display information according to some embodiments.
FIG. 9 is a block diagram showing an apparatus for reading and writing clipboard information according to some embodiments.
FIG. 10 is a block diagram showing an apparatus for reading and writing clipboard information according to some embodiments.

### DETAILED DESCRIPTION

Description will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In the related technologies, when the terminal obtains a request for reading and writing clipboard information sent by the application, the application will be directly allowed to read the clipboard information in the clipboard, and the read clipboard information is written into the behavior record of sending request, such that the application can directly and quickly acquire the clipboard information in the clipboard. However, when the clipboard information in the clipboard is private information, since each application can directly acquire the clipboard information, it is easy to cause the application to maliciously steal user information, which will bring losses and adverse effects to users, and reduce user experience.

In view of this, the present disclosure provides a method for reading and writing clipboard information, which can separate the read and write permission of the clipboard, and divide the read and write permission of the clipboard into the read permission and the write permission. Furthermore, when the terminal obtains the request for reading clipboard information sent by the application, it executes the read permission, and determines whether to allow or refuse to read the clipboard information based on the read permission. When the terminal obtains the request for writing clipboard information sent by the application, it executes the write permission, and determines whether to allow or refuse to write the clipboard information based on the write permission. The read and write permission of the clipboard is separated, such that the clipboard information cannot be directly acquired, thereby contributing to protect the security of the clipboard information, reducing the possibility of the leakage of the clipboard information, and contributing to improve the user experience.

In an example, the types of terminals may include mobile terminals, for example, mobile phones, tablets, notebooks, and the like. In another example, the structure of the terminal may include a double-sided screen terminal, a folding screen terminal, a full-screen terminal, and the like.

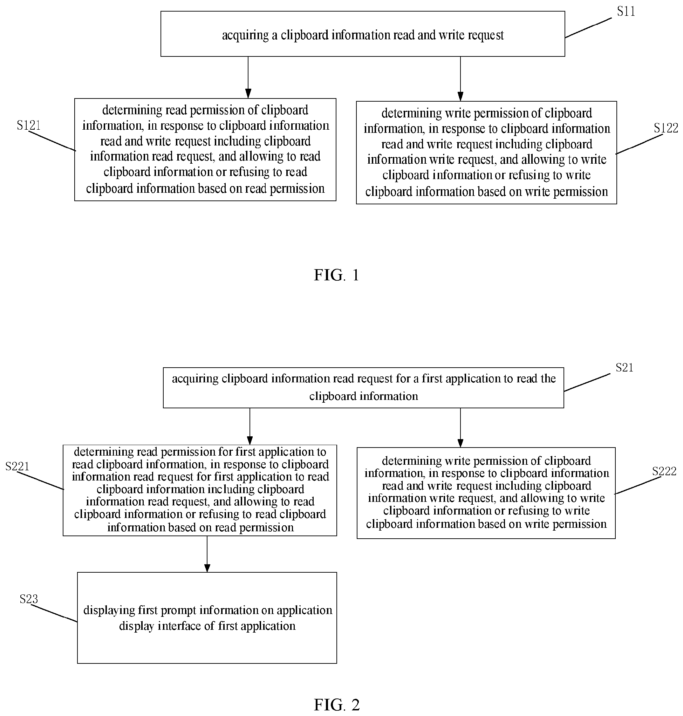

FIG. 1 is a flowchart showing a method for reading and writing clipboard information according to some embodiments. As shown in FIG. 1, the method for reading and writing clipboard information is applied in a terminal and comprises the following steps S11 to S122.

In step S11, a request for reading and writing clipboard information is acquired.

In the embodiments of the present disclosure, in order to facilitate users to manage privacy permissions more flexibly, the permission status supported by the clipboard is divided into independent read permission and write permission, thereby avoiding the leakage of user's private information due to the application maliciously reading the clipboard information that is temporarily stored by the user in the clipboard and directly writing the clipboard information into the behavior recording function of the application. In an example, the private information may include the user's identity information, for example, identity information such as an ID card number and a mobile phone number. In another example, the private information may include some confidential information related to trade secrets.

In the present disclosure, the request for reading and writing clipboard information may be sent by any application in the terminal, and is used to apply to the terminal to access the clipboard, so as to read the clipboard information in the clipboard or write the clipboard information into the clipboard. If the application has a requirement to read the clipboard information in the clipboard, a request for reading clipboard information may be sent to the terminal, such that the terminal responds and determines that the permission status supported by the clipboard is the read permission. If the application has a requirement to write clipboard information in the clipboard, a request for writing clipboard information can be sent to the terminal, such that the terminal responds and determines that the permission status supported by the clipboard is the write permission. According to the request for reading and writing clipboard information sent by the application, the terminal clarifies the permission status supported by the clipboard, and then determines the permission status of the clipboard as the read permission or the write permission, so as to allow or refuse the request for reading and writing clipboard information sent by the application and protect the security of clipboard information.

In step S121, in response to the request for reading and writing clipboard information including a request for reading clipboard information, a read permission for clipboard information is determined, and the clipboard information is allowed to be read or the clipboard information is refused to be read, based on the read permission.

In the embodiments of the present disclosure, in order to protect the privacy of the user and avoid the leakage of the private information after the application reads the clipboard information temporarily stored by the user in the clipboard, the read permission of the clipboard can be set to allow to read the clipboard information or refuse to read the clipboard information when setting the read permission of the clipboard. The terminal responses according to the obtained request for reading and writing clipboard information, and when it is determined that the application needs to read the clipboard information in the clipboard, the terminal determines that the permission status supported by the clipboard is the read permission. Based on the setting of the read permission, the application is allowed to read the clipboard information or is refused to read the clipboard information. In an example, the setting of the read permission can be that it is set by the user in the terminal in advance, the read permission involved in each application in the terminal can be set uniformly, or the read permission can be set differently according to different applications. In another example, the setting of the read permission may be the default setting of the terminal.

In step S122, in response to the request for reading and writing clipboard information including a request for writing clipboard information, a write permission for the clipboard information is determined, and the clipboard information is allowed to be written or the clipboard information is refused to be written based on the write permission.

In the embodiments of the present disclosure, in order to prevent the user from accidentally triggering the clipboard when using the application, which affects the user experience, when setting the write permission of the clipboard, the write permission can be set to allow writing the clipboard information or refuse to write the clipboard information. The terminal responses according to the obtained request for reading and writing clipboard information, and when it is determined that the clipboard information in the clipboard needs to be written into the application, the terminal determines that the permission status supported by the clipboard is the write permission. Based on the setting of the write permission, the application is allowed to write the clipboard information, or the application is refused to write the clipboard information. In an example, the setting of the write permission can be that it is set by the user in the terminal in advance, the write permission involved in each application in the terminal can be set uniformly, or the write permission can be set differently according to different applications. In another example, the setting of the write permission may be the default setting of the terminal.

Through the above embodiments, the read and write permission of the clipboard are separated, such that the permission status of the clipboard can include the read permission and the write permission, in this way, the user can more flexibly control the settings of privacy permissions, thereby contributing to prevent the clipboard information of the clipboard from being maliciously acquired by the application and resulting in the leakage of private information. In addition, based on the permission status of the clipboard being set separately, the permission supported by the clipboard which is required by the application is allowed and refused, which contributes to prevent the application from performing useless information processing and resulting in waste of power consumption, and thus contributes to save power consumption.

In some embodiments, the read permission of the clipboard can be set by default to be allowing reading, such that the application can quickly read the clipboard information in the clipboard based on the sent request for reading clipboard information, and then perform corresponding processing on the read clipboard information to meet the user demands. In an implementation scenario, if the application that sends the request for reading clipboard information is an application trusted by the user, there is no need for the user to set the read permission of the clipboard to be allowing reading, which saves the user's setting operations and contributes to improve the user experience. In another implementation scenario, if the application that sends the request for reading clipboard information is an application that the user does not trust, in order to protect the security of the clipboard information, the default setting can be changed to prevent the leakage of user information. In yet another implementation scenario, if the user is not sure whether to trust the application that sends the request for reading clipboard information, the read permission of the clipboard can be determined as the default setting which allows to read the clipboard information, such that the application can be used normally when the user requires the application to read the clipboard information. After a period of time, when it is determined that the application is an application that the user does not trust, the read permission of the clipboard is changed, and is set to be refusing to read the clipboard information to ensure the security of the clipboard information, such that the user can flexibly change the read permission according to his/her own needs, thereby improving the user experience.

In some embodiments, the write permission for the clipboard information is determined based on whether the clipboard function is currently running or executed. If the clipboard function is in the executed state, it means that the user needs to use the clipboard, and the write permission for the clipboard information is determined as allowing writing such that the user can use the clipboard normally. In an example, "allowing to write clipboard information in a state that the clipboard function is executed" can be set as the default setting of the write permission, such that the user can smoothly write the clipboard information into the clipboard when the terminal executes the clipboard function.

For ease of understanding, the following embodiments will take a first application as an example to specifically determine the permission process of the first application to read the clipboard information. Herein, the first application may be any application in the terminal, which is not limited in this disclosure.

In some embodiments, the read permission for the first application to read the clipboard information can be determined when the request for reading clipboard information is sent by the first application. That is, the terminal clarifies that the first application has a requirement to read the clipboard information, based on the request for reading clipboard information for reading the clipboard information, sent by the first application, and then determines the read permission for the clipboard information based on the requirement of the first application to read the clipboard information.

In some embodiments, the read permission for the first application to read the clipboard information can be determined based on the content format of the clipboard information and the content format of the clipboard information to be read by the first application. The latest content format of the clipboard information is matched with the content format of the clipboard information to be read by the first application, and it is determined whether the first application can read the clipboard information normally. If the content format of the clipboard information matches the content format of the clipboard information to be read by the first application, it means that the first application can read the clipboard information normally, and it can be determined that the first application has the read permission to read the clipboard information. If the content format of the clipboard information does not match the content format of the clipboard information to be read by the first application, it means that the first application cannot read the clipboard information normally, and it is determined that the first application does not have the read permission to read the clipboard information.

In an example, the content format of the clipboard information to be read by the first application can be determined according to a content format standard specified by a third party. Herein, the third party may be the developer of the first application. Through the content format standard specified by the third party, the content format that can be read by the first application can be accurately known, and then, when it is determined that the content format of the clipboard information matches the content format of the clipboard information to be read by the first application, it can be determined that the clipboard information is the information that can be read by the first application, and the first application can perform corresponding processing according to the read clipboard information. In another example, the content format standard specified by the third party may be provided by the third party. In yet another example, the content format standard specified by the third party may be formed by decompiling based on the information that can be recognized by the first application.

Based on a similar concept, the embodiments of the present disclosure further provide another method for reading and writing clipboard information applied to a terminal.

FIG. 2 is a flowchart showing a method for reading and writing clipboard information according to some embodiments, and as shown in FIG. 2, the method for reading and writing clipboard information is applied in a terminal and comprises the following steps S21 to S23.

In step S21, a request for reading clipboard information for a first application to read the clipboard information is acquired.

In step S221, in response to the request for reading clipboard information for the first application to read the clipboard information including a request for reading clipboard information, a read permission for the first application to read the clipboard information is determined, and the clipboard information is allowed to be read or the clipboard information is refused to be read based on the read permission.

In step S23, the first prompt information is displayed on the application display interface of the first application.

In some embodiments of the present disclosure, in the application display interface of the first application, the first prompt information is displayed to inform the user that the first application has a behavior of reading the clipboard information. Herein, the first prompt information is used to prompt that the first application is allowed to read the clipboard information or the first application is refused to read the clipboard information. The content of the first prompt information may include: that the first application has been allowed to read the clipboard information or that the first application has been refused to read the clipboard information. Through the first prompt information, the user can clearly and intuitively understand that the first application has the intention of reading the clipboard information, and can quickly determine the situation where the first application reads the clipboard information. In an example, the user can also correspondingly set the read and write permission for the reading of the clipboard information according to the first prompt information displayed, such that the corresponding read and write permission of the first application can meet the user's usage requirements, and in this way, the user control for the permission status supported by the clipboard is more flexible and more targeted.

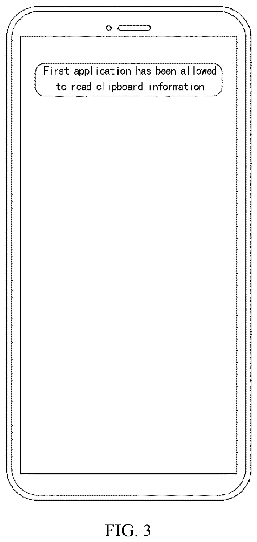

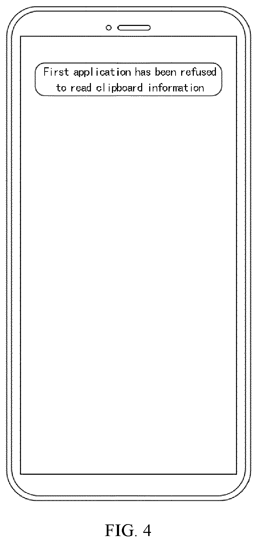

In an implementation scenario, as shown in FIG. 3 and FIG. 4, the first prompt information may be on the top of the terminal, and prompts the user in a manner of prompt bubbles. The content of the first prompt information may include: that the first application has been allowed to read the clipboard information or that the first application has been refused to read the clipboard information. FIG. 3 and FIG. 4 are schematic diagrams of display information provided according to some embodiments.

In step S222, in response to the request for reading and writing clipboard information including a request for writing clipboard information, a write permission for the clipboard information is determined, and the clipboard information is allowed to be written or the clipboard information is refused to be written based on the write permission.

In the foregoing embodiments, through the first prompt information displayed on the application display interface of the first application, the user can clearly and intuitively understand that the first application has the intention of reading the clipboard information, and can quickly determine the situation where the first application reads the clipboard information, thereby increasing the user's sensitivity to the application to read the clipboard information, which contributes to enhance the user's security awareness of managing the private information.

In some embodiments, in order for the user to be able to make it clear that the first application has been refused to read the clipboard information by the terminal, and to avoid frequent display of the first prompt information affecting the user's normal use of the first application, a first number threshold is predetermined. Herein, the first number threshold is used to determine whether to display the prompt information indicating that the first application is refused to read the clipboard information. If the number of times that the first application is refused to read the clipboard information by the terminal reaches the first number threshold, the first prompt information indicating that the first application is refused to read the clipboard information is displayed. If the number of times that the first application is refused to read the clipboard information by the terminal does not reach the first number threshold, the first prompt information indicating that the first application is refused to read the clipboard information is not displayed. The first number threshold may be multiple number thresholds. In an implementation scenario, the predetermined first number thresholds may be 1, 10, 20 and 30. In the case that the first application is refused for the 1st, 10th, 20th or 30th time to read the clipboard information, the first prompt information is displayed. In other cases, the first prompt information is not displayed.

In an example, the number of times that the first application is refused to read the clipboard information may be a count of the number of times that the first application is refused to read the clipboard information within a specified time period. For example, within 24 hours, the number of times that the first application is refused to read the clipboard information is counted. In another example, the number of times that the prompt information indicating that the first application is refused to read the clipboard information is displayed can be determined based on the monitoring of the terminal system.

In some embodiments, for the first prompt information displayed on the application display interface of the first application, after the display time reaches the predetermined time, the first prompt information can be hidden automatically. Herein, the first prompt information may include a prompt that the first application is allowed to read the clipboard information or that the first application is refused to read the clipboard information. In this way, the user does not need to actively close the prompt information, which saves the user operation and contributes to improve the user experience. In an example, a toast prompt box can be used to display the first prompt information. The toast is a prompt box that can be displayed without affecting the interaction between the user and the terminal, and can automatically disappear within a specified time.

In some embodiments, for the first prompt information displayed after the number of times that the first application is refused to read the clipboard information reaches the first number threshold, after the display time reaches the predetermined time, the first prompt information can be hidden automatically, such that the application display interface of the first application no longer continues displaying the first prompt information, thereby saving user operations. Also, it is contributive for the user to make it clear that the first application has a behavior of reading the clipboard information, and at the same time, the interference of the first prompt information to the user using the first application is reduced, thereby improving the user experience. In an implementation scenario, the display time of the first prompt information is set to 2 seconds. When the display time of the first prompt information indicating that the first application is refused to read the clipboard information reaches 2 seconds, the first prompt information is hidden automatically.

In some embodiments, when the first application frequently sends a read request to read the clipboard information to the terminal, in order to arouse the user's alertness, it is informed that the application always has a requirement to read the clipboard information, and when the number of times that the first application is refused to read the clipboard information by the terminal reaches the second number threshold, the first prompt information including the selection control is displayed. The content of the selection control may include: no longer reminding or reminding again. The second number threshold may be multiple number thresholds. Herein, the first prompt information is used to indicate that the first application is refused to read the clipboard information. In addition, through the selection control in the first prompt information, the user can independently select whether the terminal displays the first prompt information indicating that the first application is refused to read the clipboard information again. Based on the selection control triggered by the user, it is determined whether to continue or stop displaying the first prompt information. That is, the terminal determines to continue displaying the first prompt information or not to continue displaying the first prompt information according to the selection control triggered by the user. In an example, the displayed first prompt information may also include the content of the clipboard information that is refused to be read by the first application. Through the displayed content of the clipboard information, the user can make it clear that the first application frequently requests the information that needs to be read. In another example, the first prompt information may be at the bottom of the terminal or in the middle of the terminal.

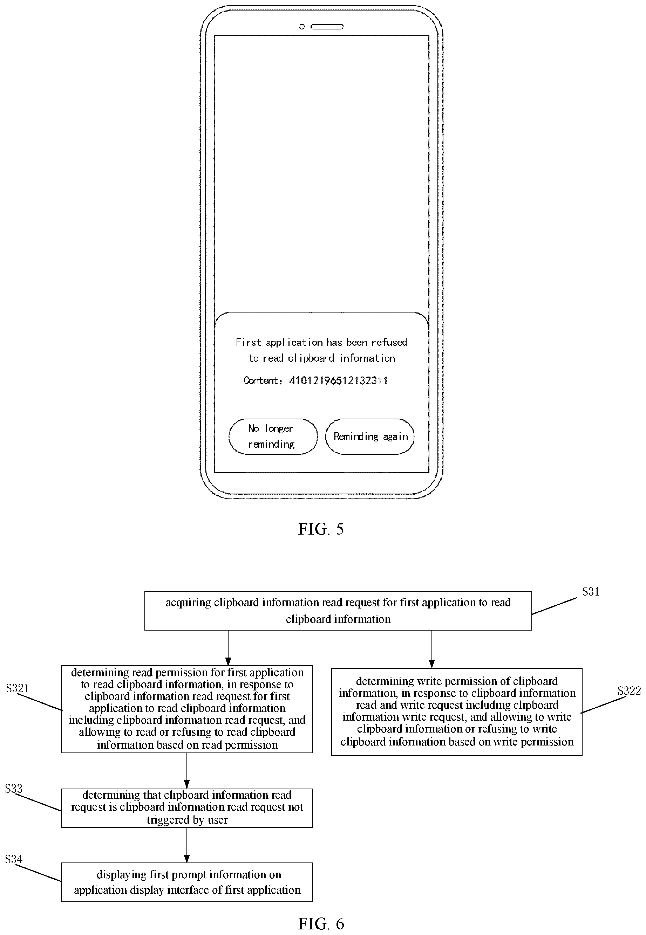

In an implementation scenario, as shown in FIG. 5. FIG. 5 is a schematic diagram of display information provided according to an embodiment. The predetermined second number thresholds are 1, 100, and 200. When the first application is refused for the 1st, 100th and 200th time to read the clipboard information, the first prompt information including the contents of the selection control and the clipboard information is displayed. Herein, the content of the clipboard information is: 41012196512132311. The content of the selection control may include: no longer reminding or reminding again. If the selection control touched and controlled by the user is no longer reminding, the first prompt information will no longer be displayed. If the selection control touched and controlled by the user is reminding again, the first prompt information is continued to be displayed.

In some embodiments, the first prompt information indicating that the first application is refused to read the clipboard information for the first time is displayed by default.

In some embodiments, the request for reading clipboard information may be triggered autonomously by the first application, or may be triggered based on a user operation. For example, the autonomous triggering of the first application may be the reading of clipboard information based on application requirements during the running process of the first application, wherein the information in the clipboard is not generated by being triggering by a user operation. Based on the triggering by a user operation, it can be understood that the information in the clipboard is obtained by the user's autonomous operation. For example, it may be that the user has copied a piece of text information and written it into the clipboard, and subsequently, the user pastes the copied text information in the first application, which can be understood as that a user operation triggers the first application to read the clipboard information.

In the embodiments of the present disclosure, before displaying the first prompt information, it is determined that whether the sending of the request for reading clipboard information of the first application to the terminal is triggered by the user or is triggered by the first application (not triggered by the user), thereby determining whether to display the first prompt information.

In an example, if the request for reading clipboard information is autonomously triggered by the first application, it means that the behavior of the first application to send the request for reading clipboard information to the terminal belongs to a private behavior of the first application, and the user is not aware of it. If the request for reading clipboard information is autonomously triggered by the first application, in order to improve the security of reading the clipboard information and prevent the leakage of the user's private information, the first prompt information is displayed on the application display interface of the first application to inform the user that the first application has the behavior of acquiring the clipboard information.

In another example, if the request for reading clipboard information is triggered by the user, it means that the user is aware of the behavior of the first application to acquire the clipboard information, the first prompt information is not displayed on the application display interface of the first application, thereby contributing to save power consumption.

FIG. 6 is a flowchart showing a method for reading and writing clipboard information according to some embodiments, and as shown in FIG. 6, the method for reading and writing clipboard information is applied in a terminal and comprises the following steps S31 to S34.

In step S31, a request for reading clipboard information for the first application to read the clipboard information is acquired.

In step S321, in response to the request for reading clipboard information for the first application to read the clipboard information including a request for reading clipboard information, a read permission for the first application to read the clipboard information is determined, and the clipboard information is allowed to be read or the clipboard information is refused to be read based on the read permission.

In step S33, it is determined that the request for reading clipboard information is a request for reading clipboard information that is not triggered by the user.

In the embodiments of the present disclosure, in order to protect the security of the clipboard information and prevent the leakage of the user's private information, the trigger that triggers the first application to send the request for reading clipboard information is determined based on the acquired request for reading clipboard information. When the request for reading clipboard information is determined as the request for reading clipboard information that is not triggered by the user, it is determined to inform the user, by displaying the first prompt information, that the first application has the behavior of acquiring the clipboard information privately to improve the sensitivity of the user to the management of the private information.

In step S34, the first prompt information is displayed on the application display interface of the first application.

In step S322, in response to the request for reading and writing clipboard information including a request for writing clipboard information, a write permission for the clipboard information is determined, and the clipboard information is allowed to be written or the clipboard information is refused to be written based on the write permission.

In an implementation scenario, if the user actively triggers the first application to execute the function of reading the clipboard information in the first application, then in the application display interface of the first application, the first prompt information which has the display content of "the first application has been allowed to read the clipboard information" may not appear. If the first application autonomously triggers the first application to execute the function of reading the clipboard information, the information for indicating that the first application is allowed to read the clipboard information or that the first application is refused to read the clipboard information is displayed on the application display interface of the first application to inform the user that the first application has the behavior of acquiring the clipboard information privately.

In some embodiments, it can be determined based on the program call stack that the request for reading clipboard information is triggered autonomously by the first application, or triggered based on the user operation. Herein, the program call stack may include a user-specific program call stack and a non-user-specific program call stack. If the reading of the clipboard information is triggered by the user operation, based on the user operation in the first application, the user-specific program call stack is triggered to send the request for reading clipboard information to the clipboard.

When there is no user trigger in the first application, and it is autonomously triggered by the first application, that is, it is not triggered by the user, the first application triggers the non-user-specific program call stack to send the request for reading clipboard information to the terminal. In view of this, according to the trigger of the request for reading clipboard information being a non-user-specific program call stack, the terminal can determine that the request for reading clipboard information is triggered privately by the first application, rather than the user has a requirement to read the clipboard information.

Based on the similar concept, the embodiments of the present disclosure also provide yet another method for reading and writing clipboard information applied to a terminal.

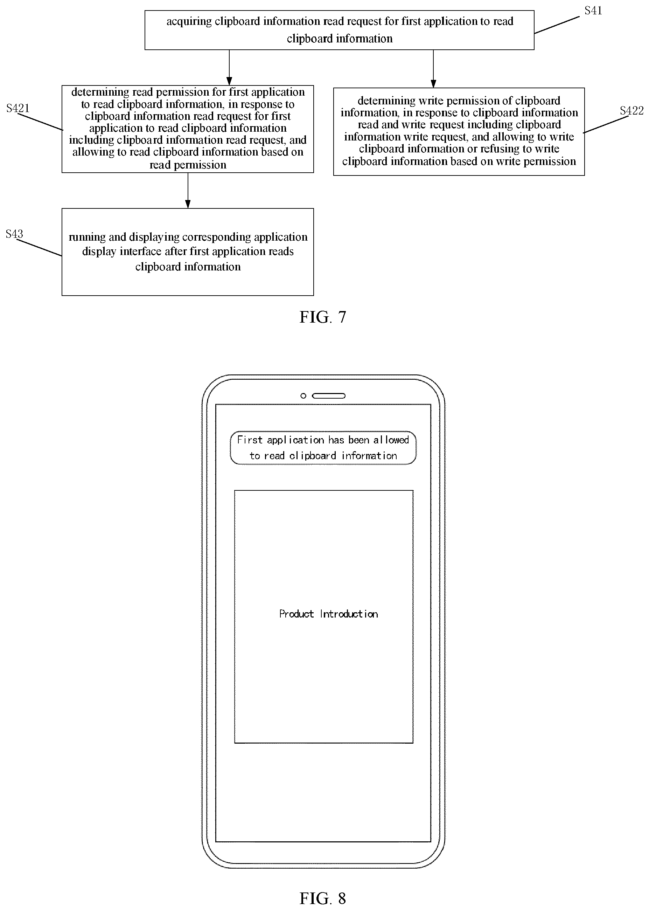

FIG. 7 is a flowchart showing a method for reading and writing clipboard information according to some embodiments, and as shown in FIG. 7, the method for reading and writing clipboard information is applied in a terminal and comprises the following steps S41 to S43.

In step S41, a request for reading clipboard information for the first application to read the clipboard information is acquired.

In step S421, in response to the request for reading clipboard information for the first application to read the clipboard information including a request for reading clipboard information, a read permission for the first application to read the clipboard information is determined, and the clipboard information is allowed to be read based on the read permission.

In step S43, a corresponding application display interface is run and displayed after the first application reads the clipboard information.

In the embodiments of the present disclosure, after the terminal determines that the first application can be allowed to read the clipboard information, the first application reads the clipboard information to obtain the content of the clipboard information. The first application runs the obtained clipboard information and displays it on the corresponding application display interface after the first application reads the clipboard information, such that the user can intuitively and clearly know that the first application has read and run the clipboard information.

In a real-time scenario, as shown in FIG. 8, if the clipboard information is a production link that can be read by the first application, running and displaying the corresponding application display interface after the first application reads the clipboard information may include: invoking the corresponding product introduction of the product link in the first application, and displaying the product introduction in the current application display interface of the first application. FIG. 8 is a schematic diagram of display information provided according to an embodiment. Alternatively, running and displaying the corresponding application display interface after the first application reads the clipboard information may include: determining the position of the product link in the first application, and then jumping the current application display interface of the first application to the application display interface of the product link in the first application, and displaying the product corresponding to the product link.

In step S422, in response to the request for reading and writing clipboard information including a request for writing clipboard information, a write permission for the clipboard information is determined, and the clipboard information is allowed to be written or the clipboard information is refused to be written based on the write permission.

In some embodiments, if the first application has been allowed to read the clipboard information or allowed to write clipboard information, it is recorded in the behavior recording function of the first application to clarify the behavior of the first application.

In an implementation scenario, the permission status of the clipboard function in the mobile phone regarding the read and write permission is divided into the read permission and the write permission. The read permission is set by default to allow reading of the clipboard information, and the write permission is set by default to allow writing of the clipboard information when the clipboard function is executed. When the first application sends a request for reading and writing clipboard information to the mobile phone, if the content format of the clipboard information matches the content format of the clipboard information to be read by the first application, it is determined and allowed that the first application has a read permission to read the clipboard information. The first prompt information is displayed in the form of prompt bubbles to inform the user that the first application has been allowed to read the clipboard information, at the top of the mobile phone. The displayed first application interface may be a corresponding application display interface after the first application runs the clipboard information. If the latest content format of the clipboard information does not match the content format of the clipboard information to be read by the first application, it is determined that the first application does not have the read permission to read the clipboard information, and the first application is refused to read the clipboard information. When the first application is refused for the 10th, 20th, 30th ... time on the same day, a toast prompt box will pop up to notify the user that the first application has been refused to read the clipboard information. When the first application is refused for the 1st, 100th, 200th time on the same day, the first prompt information including the selection control and the contents of the clipboard information is displayed. The user can determine that the terminal continues displaying the first prompt information or does not continue displaying the first prompt information through the triggered selection control. If the first application has been allowed to read the clipboard information or allowed to write the clipboard information, it is recorded in the behavior recording function of the first application to clarify the behavior of the first application.

Based on the similar concept, the embodiments of the present disclosure also provide an apparatus for reading and writing clipboard information, which is applied to a terminal.

It can be understood that, in order to implement the above functions, the apparatus for reading and writing clipboard information provided by the embodiments of the present disclosure includes a corresponding hardware structure and/or software module for executing each function. In combination with the units and algorithm steps of the respective examples disclosed in the embodiments of the present disclosure, the embodiments of the present disclosure can be implemented in the form of hardware or a combination of hardware and computer software. Whether a function is executed by the hardware or a method of driving the hardware by the computer software depends on the specific application and design constraints of the technical solution. A person skilled in the art may use different methods to implement the described functions for each specific application, but such implementation should not be considered to exceed the scope of the technical solutions of the embodiments of the present disclosure.

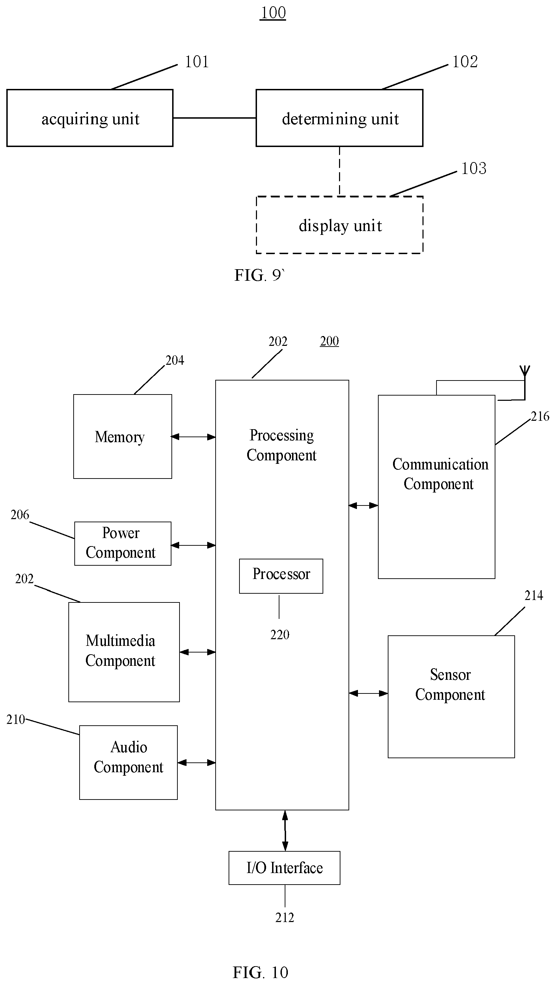

FIG. 9 is a block diagram showing an apparatus for reading and writing clipboard information according to some embodiments. Referring to FIG. 9, the apparatus 100 for reading and writing clipboard information includes an acquiring unit 101 and a determining unit 102.

The acquiring unit 101 is configured to acquire a request for reading and writing clipboard information.

The determining unit 102 is configured to, in response to the request for reading and writing clipboard information including a request for reading clipboard information, determine a read permission for clipboard information, and allow to read the clipboard information or refuse to read the clipboard information based on the read permission.

The determining unit 102 is further configured to, in response to the request for reading and writing clipboard information including a request for writing clipboard information, determine a write permission for the clipboard information, and allow to write the clipboard information or refuse to write the clipboard information based on the write permission.

In some embodiments, the determining unit 102 determines the read permission for the clipboard information in the following manner: determining that reading a permission set by default for the read permission for the clipboard information is allowed.

In some embodiments, the determining unit 102 determines the write permission for the clipboard information in the following manner: in response to a clipboard function being executed, determining that the write permission for the clipboard information is to allow writing.

In some embodiments, the request for reading clipboard information is a request for reading clipboard information for a first application to read the clipboard information. The determining unit 102 determines the read permission for the clipboard information in the following manner: determining the read permission for the first application to read the clipboard information.

In some embodiments, the determining unit 102 determines the read permission for the first application to read the clipboard information in the following manner: when a content format of the clipboard information matches a content format of the clipboard information to be read by the first application, determining that the first application has the read permission to read the clipboard information; and when the content format of the clipboard information does not match the content format of the clipboard information to be read by the first application, determining that the first application does not have the read permission to read the clipboard information.

In some embodiments, after allowing to read the clipboard information or refusing to read the clipboard information, the apparatus 100 for reading and writing clipboard information further comprises: a display unit 103, configured to display first prompt information on an application display interface of the first application, the first prompt information being used to prompt that the first application is allowed to read the clipboard information or that the first application is refused to read the clipboard information.

In some embodiments, the display unit 103 displays the first prompt information on the application display interface of the first application in the following manner: in response to the first application being refused to read the clipboard information and the number of times the first application is refused to read the clipboard information reaching a first number threshold, displaying the first prompt information for indicating that the first application is refused to read the clipboard information, and hiding the first prompt information after a predetermined time is reached.

In some embodiments, the display unit 103 displays the first prompt information on the application display interface of the first application in the following manner: in response to the first application being refused to read the clipboard information and the number of times the first application is refused to read the clipboard information reaching a second number threshold, displaying the first prompt information for indicating that the first application is refused to read the clipboard information, the first prompt information including a selection control for a user to determine whether to display the first prompt information again; and based on the selection control triggered by the user, continuing or stopping displaying the first prompt information.

In some embodiments, the determining unit 102 is further configured to: determine that the request for reading clipboard information is a request for reading clipboard information that is not triggered by the user.

In some embodiments, the determining unit 102 determines that the request for reading clipboard information is a request for reading clipboard information that is not triggered by the user in the following manner: when the request for reading clipboard information is triggered by a non-user-specific program call stack, determining that the request for reading clipboard information is a request for reading clipboard information that is not triggered by the user.

In some embodiments, after allowing to read the clipboard information, the display unit 103 is further configured to: run and display a corresponding application display interface after the first application reads the clipboard information.

With respect to the apparatuses in the above embodiments, the specific manners for performing operations for individual modules therein have been described in detail in the embodiments regarding the methods, which will not be elaborated herein.

FIG. 10 is a block diagram showing an apparatus 200 for reading and writing clipboard information according to some embodiments. For example, the apparatus 200 for reading and writing clipboard information can be a mobile phone, a computer, a digital broadcast terminal, a messaging device, a gaming console, a tablet, a medical device, exercise equipment, a personal digital assistant, and the like.

Referring to FIG. 10, the apparatus 200 for reading and writing clipboard information may include one or more of the following components: a processing component 202, a memory 204, a power component 206, a multimedia component 208, an audio component 210, an input/output (I/O) interface 212, a sensor component 214, and a communication component 216.

The processing component 202 typically controls overall operations of the apparatus 200 for reading and writing clipboard information, such as the operations associated with display, telephone calls, data communications, camera operations, and recording operations. The processing component 202 may include one or more processors 220 to execute instructions to implement all or part of the steps in the above described methods. Moreover, the processing component 202 may include one or more modules which facilitate the interaction between the processing component 202 and other components. For instance, the processing component 202 may include a multimedia module to facilitate the interaction between the multimedia component 208 and the processing component 202.

The memory 204 is configured to store various types of data to support the operation of the apparatus 200 for reading and writing clipboard information. Examples of such data include instructions for any applications or methods operated on the apparatus 200 for reading and writing clipboard information, contact data, phonebook data, messages, pictures, videos, etc. The memory 204 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 206 supplies power to various components of the apparatus 200 for reading and writing clipboard information. The power component 206 may include a power management system, one or more power sources, and other components associated with the generation, management, and distribution of power in the apparatus 200 for reading and writing clipboard information.

The multimedia component 208 includes a screen providing an output interface between the apparatus 200 for reading and writing clipboard information and a user. In some embodiments, the screen may include a liquid crystal display (LCD) and a touch panel (TP). In some embodiments, an organic light-emitting diode (OLED) display can be adopted.

If the screen includes the touch panel, the screen can be implemented as a touch screen to receive input signals from the user. The touch panel includes one or more touch sensors to sense touches, swipes, and gestures on the touch panel. The touch sensors can not only sense a boundary of a touch or swipe action, but also sense a period of time and a pressure associated with the touch or swipe action. In some embodiments, the multimedia component 208 includes a front camera and/or a rear camera. The front camera and/or the rear camera can receive external multimedia data while the apparatus 200 for reading and writing clipboard information is in an operation mode, such as a photographing mode or a video mode. Each of the front camera and the rear camera may be a fixed optical lens system or have focus and optical zoom capability.

The audio component 210 is configured to output and/or input audio signals. For example, the audio component 210 includes a microphone (MIC) configured to receive an external audio signal when the apparatus 200 for reading and writing clipboard information is in an operation mode, such as a call mode, a recording mode, and a voice recognition mode. The received audio signal can be further stored in the memory 204 or transmitted via the communication component 216. In some embodiments, the audio component 210 further includes a speaker to output audio signals.

The I/O interface 212 provides an interface between the processing component 202 and peripheral interface modules, such as a keyboard, a click wheel, buttons, and the like. The buttons may include, but are not limited to, a home button, a volume button, a starting button, and a locking button.

The sensor component 214 includes one or more sensors to provide status assessments of various aspects of the apparatus 200 for reading and writing clipboard information. For instance, the sensor component 214 can detect an on/off status of the apparatus 200 for reading and writing clipboard information, relative positioning of components, e.g., the display and a keypad, of the apparatus 200 for reading and writing clipboard information, the sensor component 214 can also detect a change in position of the apparatus 200 for reading and writing clipboard information or one component of the apparatus 200 for reading and writing clipboard information, a presence or absence of user contact with the apparatus 200 for reading and writing clipboard information, an orientation or an acceleration/deceleration of the apparatus 200 for reading and writing clipboard information, and a change in temperature of the apparatus 200 for reading and writing clipboard information. The sensor component 214 may include a proximity sensor configured to detect the presence of nearby objects without any physical contact. The sensor component 214 may also include a light sensor, such as a CMOS or CCD image sensor, for use in imaging applications. In some embodiments, the sensor component 214 can also include an accelerometer sensor, a gyroscope sensor, a magnetic sensor, a pressure sensor, or a temperature sensor.

The communication component 216 is configured to facilitate wired or wireless communication between the apparatus 200 for reading and writing clipboard information and other devices. The apparatus 200 for reading and writing clipboard information can access a wireless network based on a communication standard, such as Wi-Fi, 2G, 3G, 4G, or 5G, or a combination thereof. In one exemplary embodiment, the communication component 216 receives a broadcast signal or broadcast associated information from an external broadcast management system via a broadcast channel. In one exemplary embodiment, the communication component 216 further includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 200 for reading and writing clipboard information may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as the memory 204 including the instructions executable by the processor 220 in the apparatus 200 for reading and writing clipboard information, for completing the above described methods. For example, the non-transitory computer-readable storage medium can be a ROM, a random access memory (RAM), a CD-ROM, a magnetic tape, a floppy disc, an optical data storage device, and the like.

Various embodiments of the present disclosure can have the following advantages: through the method for reading and writing clipboard information provided by the present disclosure, the read and write permission of the clipboard can be divided into the read permission and the write permission to determine the permissions for the clipboard to respond and execute correspondingly according to the acquired request for reading and writing clipboard information, thereby contributing to prevent the leakage of the clipboard information in the clipboard, improving the security of the clipboard information, and raising the user experience.

It can be understood that the "multiple" in the disclosure means two or more, and other quantifiers are similar. "And/or" describes the relationship of the related objects, indicating that there may be three relationships, for example, A and/or B may indicate three cases: A exists alone, A and B exist simultaneously, and B exists alone. The character "/" generally indicates that the relationship between the contextually relevant objects is a "or" relationship. The singular forms "a," "an," and "the" are also intended to include the plural forms unless the context clearly indicates otherwise.

It can be further understood that although the terms such as "first" and "second" are used to describe various information, these information should not be limited by these terms. The terms are only used to distinguish the same type of information from each other, and do not indicate a specific order or importance. In fact, the expressions such as "first" and "second" can be used interchangeably. For instance, first information can also be referred to as second information without departing from the scope of the disclosure, and similarly, the second information can also be referred to as the first information.

It can be further understood that, unless otherwise specified, "connection" includes a direct connection between the two without other components, and also includes an indirect connection between the two with other elements.

It can be further understood that although the operations in the embodiments of the present disclosure are described in a specific order in the accompanying drawings, it will not be understood as requiring that the operations are performed in the specific order shown or in a serial order, or that all the operations shown are performed to acquire the desired result. In certain environments, multitasking and parallel processing may be advantageous.

It is intended that the specification and embodiments be considered as examples only. Other embodiments of the disclosure will be apparent to those skilled in the art in view of the specification and drawings of the present disclosure. That is, although specific embodiments have been described above in detail, the description is merely for purposes of illustration. It should be appreciated, therefore, that many aspects described above are not intended as required or essential elements unless explicitly stated otherwise.

Some other embodiments of the present disclosure can be available to those skilled in the art upon consideration of the specification and practice of the various embodiments disclosed herein. The present application is intended to cover any variations, uses, or adaptations of the present disclosure following general principles of the present disclosure and include the common general knowledge or conventional technical means in the art without departing from the present disclosure. The specification and examples can be shown as illustrative only, and the true scope of the disclosure is indicated by the following claims.

## Claims

1. A method for reading and writing clipboard information, applied to a terminal, the method comprising:
acquiring (S11) a request for reading and writing clipboard information; and
determining (S121) a read permission for the clipboard information, in response to the request for reading and writing clipboard information including a request for reading clipboard information, and allowing to read the clipboard information or refusing to read the clipboard information based on the read permission;
determining (S122) a write permission for the clipboard information, in response to the request for reading and writing clipboard information including a request for writing clipboard information, and allowing to write the clipboard information or refusing to write the clipboard information based on the write permission,
wherein the read permission and the write permission are set separately,
the request for reading clipboard information is a request for reading clipboard information for a first application to read the clipboard information;
the determining (S121) a read permission for clipboard information comprises:
determining the read permission for the first application to read the clipboard information,
after allowing to read the clipboard information or refusing to read the clipboard information, the method further comprises:
displaying (S23) first prompt information on an application display interface of a first application, the first prompt information being used to prompt that the first application is allowed to read the clipboard information or that the first application is refused to read the clipboard information, and
the displaying first prompt information on an application display interface of the first application comprises:
displaying the first prompt information for indicating that the first application is refused to read the clipboard information,
**characterised in that** the method further comprises:
hiding automatically the first prompt information after a predetermined time is reached, in response to the first application being refused to read the clipboard information and the number of times that the first application is refused to read the clipboard information reaching a first number threshold.

2. The method for reading and writing clipboard information according to claim 1, wherein the determining (S121) a read permission for clipboard information comprises:
determining the read permission as a default setting which allows to read the clipboard information.

3. The method for reading and writing clipboard information according to claims 1 or 2, wherein the determining (S122) a write permission for the clipboard information comprises:
determining that the write permission for the clipboard information is to allow writing, in response to an execution of a clipboard function.

4. The method for reading and writing clipboard information according to claim 1, wherein the determining a read permission for the first application to read the clipboard information comprises:
when a content format of the clipboard information matches a content format of the clipboard information read by the first application, determining that the first application has the read permission to read the clipboard information; and
when the content format of the clipboard information does not match the content format of the clipboard information read by the first application, determining that the first application does not have the read permission to read the clipboard information.

5. The method for reading and writing clipboard information according to claim 1, wherein the displaying first prompt information on an application display interface of the first application comprises:
displaying the first prompt information for indicating that the first application is refused to read the clipboard information, in response to the first application being refused to read the clipboard information and the number of times the first application is refused to read the clipboard information reaching a second number threshold, the first prompt information including a selection control for a user to determine whether to display the first prompt information again; and
continuing or stopping displaying the first prompt information, based on the selection control triggered by the user.

6. The method for reading and writing clipboard information according to claim 1, wherein before displaying (S34) the first prompt information on the application display interface of the first application, the method further comprises:
determining (S33) that the request for reading clipboard information is a request for reading clipboard information that is not triggered by the user.

7. The method for reading and writing clipboard information according to claim 6, wherein the determining that the request for reading clipboard information is a request for reading clipboard information that is not triggered by the user comprises:
when the request for reading clipboard information is triggered autonomously by the first application, determining that the request for reading clipboard information is a request for reading clipboard information that is not triggered by the user.

8. The method for reading and writing clipboard information according to any of claims 1 to 7, wherein after allowing to read the clipboard information, the method further comprises:
running and displaying (S43) a corresponding application display interface after a first application reads the clipboard information.

9. An apparatus for reading and writing clipboard information, **characterized in that** the apparatus comprises:
a storage, configured to store instructions; and
a processor, configured to invoke the instructions stored in the storage to execute the method for reading and writing clipboard information according to any one of claims 1 to 8.

10. A computer-readable storage medium having stored therein instructions that, when executed by a processor, executes the method for reading and writing clipboard information according to any one of claims 1 to 8.

## Patentansprüche

1. Verfahren zum Lesen und Schreiben von Zwischenablage-Informationen, das bei einem Endgerät angewendet wird, wobei das Verfahren umfasst:
Erfassen (S11) einer Anfrage zum Lesen und Schreiben von Zwischenablage-Informationen; und
Festlegen (S121) einer Leseberechtigung für die Zwischenablage-Informationen als Reaktion auf die Anfrage zum Lesen und Schreiben von Zwischenablage-Informationen, einschließlich einer Anfrage zum Lesen von Zwischenablage-Informationen, und Erlauben des Lesens der Zwischenablage-Informationen oder Verweigern des Lesens der Zwischenablage-Informationen basierend auf der Leseberechtigung;
Festlegen (S122) einer Schreibberechtigung für die Zwischenablage-Informationen als Reaktion auf die Anfrage zum Lesen und Schreiben von Zwischenablage-Informationen, einschließlich einer Anfrage zum Schreiben von Zwischenablage-Informationen, und Erlauben des Schreibens der Zwischenablage-Informationen oder Verweigern des Schreibens der Zwischenablage-Informationen basierend auf der Schreibberechtigung;
wobei die Leseberechtigung und die Schreibberechtigung separat festgelegt werden, wobei die Anfrage zum Lesen von Zwischenablage-Informationen eine Anfrage zum Lesen von Zwischenablage-Informationen ist, damit eine erste Anwendung die Zwischenablage-Informationen lesen kann;
wobei das Festlegen (S121) einer Leseberechtigung für Zwischenablage-Informationen umfasst:
Festlegen der Leseberechtigung für die erste Anwendung zum Lesen der Zwischenablage-Informationen,
nach dem Erlauben des Lesens der Zwischenablage-Informationen oder dem Verweigern des Lesens der Zwischenablage-Informationen umfasst das Verfahren ferner: Anzeigen (S23) von ersten Prompt-Informationen auf einer Anwendungsanzeigeschnittstelle einer ersten Anwendung, wobei die erste Prompt-Information dazu dient, darauf hinzuweisen, dass der ersten Anwendung das Lesen der Zwischenablage-Informationen erlaubt wird oder dass der ersten Anwendung das Lesen der Zwischenablage-Informationen verweigert wird, und
wobei das Anzeigen der ersten Prompt-Informationen auf einer Anwendungsanzeigeschnittstelle der ersten Anwendung umfasst:
Anzeigen der ersten Prompt-Informationen, um anzugeben, dass der ersten Anwendung das Lesen der Zwischenablage-Informationen verweigert wird,
**dadurch gekennzeichnet, dass** das Verfahren ferner umfasst:
automatisches Ausblenden der ersten Prompt-Informationen nach einer vorbestimmten Zeit, als Reaktion darauf, dass der ersten Anwendung das Lesen der Zwischenablage-Informationen verweigert wird und die Anzahl der Fälle, in denen der ersten Anwendung das Lesen der Zwischenablage-Informationen verweigert wird, einen ersten Schwellenwert erreicht.

2. Verfahren zum Lesen und Schreiben von Zwischenablage-Informationen nach Anspruch 1, wobei das Festlegen (S121) einer Leseberechtigung für Zwischenablage-Informationen umfasst:
Festlegen der Leseberechtigung als eine Standardeinstellung, die das Lesen der Zwischenablage-Informationen erlaubt.

3. Verfahren zum Lesen und Schreiben von Zwischenablage-Informationen nach Anspruch 1 oder 2, wobei das Festlegen (S122) einer Schreibberechtigung für die Zwischenablage-Informationen umfasst:
Festlegen, dass die Schreibberechtigung für die Zwischenablage-Informationen das Schreiben erlaubt, als Reaktion auf eine Ausführung einer Zwischenablagefunktion.

4. Verfahren zum Lesen und Schreiben von Zwischenablage-Informationen nach Anspruch 1, wobei das Festlegen einer Leseberechtigung für die erste Anwendung zum Lesen der Zwischenablage-Informationen umfasst:
wenn ein Inhaltsformat der Zwischenablage-Informationen mit einem Inhaltsformat der von der ersten Anwendung gelesenen Zwischenablage-Informationen übereinstimmt, Feststellen, dass die erste Anwendung über die Leseberechtigung zum Lesen der Zwischenablage-Informationen verfügt; und
wenn das Inhaltsformat der Zwischenablage-Informationen nicht mit dem Inhaltsformat der von der ersten Anwendung gelesenen Zwischenablage-Informationen übereinstimmt, Feststellen, dass die erste Anwendung nicht über die Leseberechtigung zum Lesen der Zwischenablage-Informationen verfügt.

5. Verfahren zum Lesen und Schreiben von Zwischenablage-Informationen nach Anspruch 1, wobei das Anzeigen der ersten Prompt-Informationen auf einer Anwendungsanzeigeschnittstelle der ersten Anwendung umfasst:
Anzeigen der ersten Prompt-Informationen, um anzugeben, dass der ersten Anwendung das Lesen der Zwischenablage-Informationen verweigert wurde, als Reaktion darauf, dass der ersten Anwendung das Lesen der Zwischenablage-Informationen verweigert wurde und die Anzahl der Fälle, in denen der ersten Anwendung das Lesen der Zwischenablage-Informationen verweigert wurde, einen zweiten Schwellenwert erreicht hat, wobei die ersten Prompt-Informationen eine Auswahlsteuerung enthalten, über die ein Benutzer festlegen kann, ob die ersten Prompt-Informationen erneut angezeigt werden sollen; und
Fortsetzen oder Anhalten der Anzeige der ersten Prompt-Informationen basierend auf der vom Benutzer ausgelösten Auswahlsteuerung.

6. Verfahren zum Lesen und Schreiben von Zwischenablage-Informationen nach Anspruch 1, wobei das Verfahren vor dem Anzeigen (S34) der ersten Prompt-Informationen auf der Anwendungsanzeigeschnittstelle der ersten Anwendung ferner umfasst:
Feststellen (S33), dass es sich bei der Anfrage zum Lesen von Zwischenablage-Informationen um eine Anfrage zum Lesen von Zwischenablage-Informationen handelt, die nicht vom Benutzer ausgelöst wird.

7. Verfahren zum Lesen und Schreiben von Zwischenablage-Informationen nach Anspruch 6, wobei das Feststellen, dass es sich bei der Anfrage zum Lesen von Zwischenablage-Informationen um eine Anfrage zum Lesen von Zwischenablage-Informationen handelt, die nicht vom Benutzer ausgelöst wird, umfasst:
wenn die Anfrage zum Lesen von Zwischenablage-Informationen von der ersten Anwendung autonom ausgelöst wird, Feststellen, dass es sich bei der Anfrage zum Lesen von Zwischenablage-Informationen um eine Anfrage zum Lesen von Zwischenablage-Informationen handelt, die nicht vom Benutzer ausgelöst wird.

8. Verfahren zum Lesen und Schreiben von Zwischenablage-Informationen nach einem der Ansprüche 1 bis 7, wobei das Verfahren nach dem Erlauben des Lesens der Zwischenablage-Informationen ferner umfasst:
Ausführen und Anzeigen (S43) einer entsprechenden Anwendungsanzeigeschnittstelle, nachdem eine erste Anwendung die Zwischenablage-Informationen gelesen hat.

9. Vorrichtung zum Lesen und Schreiben von Zwischenablage-Informationen, **dadurch gekennzeichnet, dass** die Vorrichtung aufweist:
einen Speicher, der zum Speichern von Anweisungen ausgebildet ist; und
einen Prozessor, der so ausgebildet ist, dass er die im Speicher gespeicherten Anweisungen aufruft, um das Verfahren zum Lesen und Schreiben von Zwischenablage-Informationen nach einem der Ansprüche 1 bis 8 auszuführen.

10. Computerlesbares Speichermedium mit darauf gespeicherten Anweisungen, die, wenn sie von einem Prozessor ausgeführt werden, das Verfahren zum Lesen und Schreiben von Zwischenablage-Informationen nach einem der Ansprüche 1 bis 8 ausführen.

## Revendications

1. Procédé de lecture et d'écriture d'informations de presse-papiers, appliqué à un terminal, le procédé comprenant les étapes consistant à :
acquérir (S11) une demande de lecture et d'écriture d'informations de presse-papiers ; et
déterminer (S121) une autorisation de lecture des informations de presse-papiers en réponse à la demande de lecture et d'écriture d'informations de presse-papiers comprenant une demande de lecture d'informations de presse-papiers, et autoriser la lecture des informations de presse-papiers ou refuser la lecture des informations de presse-papiers sur la base de l'autorisation de lecture ;
déterminer (S122) une autorisation d'écriture des informations de presse-papiers, en réponse à la demande de lecture et d'écriture d'informations de presse-papiers comprenant une demande d'écriture d'informations de presse-papiers, et autoriser l'écriture des informations de presse-papiers ou refuser l'écriture des informations de presse-papiers sur la base de l'autorisation d'écriture,
dans lequel l'autorisation de lecture et l'autorisation d'écriture sont définies séparément,
la demande de lecture d'informations de presse-papiers est une demande de lecture d'informations de presse-papiers permettant à une première application de lire les informations de presse-papiers ;
l'étape de détermination (S121) d'une autorisation de lecture d'informations de presse-papiers consiste à :
déterminer l'autorisation de lecture permettant à la première application de lire les informations de presse-papiers,
après l'étape d'autorisation de lecture des informations de presse-papiers ou de refus de lecture des informations de presse-papiers, le procédé comprend en outre l'étape consistant à :
afficher (S23) des premières informations d'invite sur une interface d'affichage d'application d'une première application, les premières informations d'invite étant utilisées pour informer du fait que la première application est autorisée à lire les informations de presse-papiers ou que la première application n'est pas autorisée à lire les informations de presse-papiers, et
l'étape d'affichage des premières informations d'invite sur une interface d'affichage d'application de la première application consiste à :
afficher les premières informations d'invite pour indiquer que la première application n'est pas autorisée à lire les informations de presse-papiers,
**caractérisé en ce que** le procédé comprend en outre l'étape consistant à :
cacher automatiquement les premières informations d'invite après l'atteinte d'un temps prédéterminé, en réponse au fait que la première application n'a pas été autorisée à lire les informations de presse-papiers et à l'atteinte d'un premier nombre seuil du nombre de refus de lecture des informations de presse-papiers par la première application.

2. Procédé de lecture et d'écriture d'informations de presse-papiers selon la revendication 1, dans lequel l'étape de détermination (S121) d'une autorisation de lecture d'informations de presse-papiers consiste à :
déterminer l'autorisation de lecture en tant que paramètre par défaut qui autorise la lecture des informations de presse-papiers.

3. Procédé de lecture et d'écriture d'informations de presse-papiers selon les revendications 1 ou 2, dans lequel l'étape de détermination (S122) d'une autorisation d'écriture des informations de presse-papiers consiste à :
déterminer que l'autorisation d'écriture des informations de presse-papiers consiste à autoriser une écriture, en réponse à une exécution d'une fonction de presse-papiers.

4. Procédé de lecture et d'écriture d'informations de presse-papiers selon la revendication 1, dans lequel l'étape de détermination d'une autorisation de lecture permettant à la première application de lire les informations de presse-papiers consiste à :
lorsqu'un format de contenu des informations de presse-papiers correspond à un format de contenu des informations de presse-papiers lues par la première application, déterminer que la première application a l'autorisation de lecture pour lire les informations de presse-papiers ; et
lorsque le format de contenu des informations de presse-papiers ne correspond pas au format de contenu des informations de presse-papiers lues par la première application, déterminer que la première application n'a pas l'autorisation de lecture pour lire les informations de presse-papiers.

5. Procédé de lecture et d'écriture d'informations de presse-papiers selon la revendication 1, dans lequel l'étape d'affichage de premières informations d'invite sur une interface d'affichage d'application de la première application consiste à :
afficher les premières informations d'invite pour indiquer que la première application n'est pas autorisée à lire les informations de presse-papiers, en réponse au fait que la première application n'est pas autorisée à lire les informations de presse-papiers et à l'atteinte d'un second nombre seuil du nombre de refus de lecture des informations de presse-papiers par la première application, les premières informations d'invite comprenant une commande de sélection destinée à un utilisateur pour déterminer s'il convient d'afficher de nouveau les premières informations d'invite ; et
continuer ou interrompre l'affichage des premières informations d'invite, sur la base de la commande de sélection déclenchée par l'utilisateur.

6. Procédé de lecture et d'écriture d'informations de presse-papiers selon la revendication 1, dans lequel, avant l'étape d'affichage (S34) des premières informations d'invite sur l'interface d'affichage d'application de la première application, le procédé comprend en outre l'étape consistant à :
déterminer (S33) que la demande de lecture d'informations de presse-papiers est une demande de lecture d'informations de presse-papiers qui n'est pas déclenchée par l'utilisateur.

7. Procédé de lecture et d'écriture d'informations de presse-papiers selon la revendication 6, dans lequel l'étape de détermination du fait que la demande de lecture d'informations de presse-papiers est une demande de lecture d'informations de presse-papiers qui n'est pas déclenchée par l'utilisateur consiste à :
lorsque la demande de lecture d'informations de presse-papiers est déclenchée de manière autonome par la première application, déterminer que la demande de lecture d'informations de presse-papiers est une demande de lecture d'informations de presse-papiers qui n'est pas déclenchée par l'utilisateur.

8. Procédé de lecture et d'écriture d'informations de presse-papiers selon l'une quelconque des revendications 1 à 7, dans lequel, après l'étape d'autorisation de lecture des informations de presse-papiers, le procédé comprend en outre l'étape consistant à :
lancer et afficher (S43) une interface d'affichage d'application correspondante après la lecture des informations de presse-papiers par une première application.

9. Appareil de lecture et d'écriture d'informations de presse-papiers, **caractérisé en ce que** l'appareil comprend :
un dispositif de stockage, configuré pour stocker des instructions ; et
un processeur, configuré pour appeler les instructions stockées dans le dispositif de stockage pour exécuter le procédé de lecture et d'écriture d'informations de presse-papiers selon l'une quelconque des revendications 1 à 8.

10. Support de stockage lisible par ordinateur comportant, stockées en son sein, des instructions qui, lorsqu'elles sont exécutées par un processeur, exécutent le procédé de lecture et d'écriture d'informations de presse-papiers selon l'une quelconque des revendications 1 à 8.
